## Europäisches Patentamt
### European Patent Office
### Office européen des brevets

(19)

(11) Veröffentlichungsnummer: **0 271 807**

**A2**

(12) **EUROPÄISCHE PATENTANMELDUNG**

(21) Anmeldenummer: **87118149.1**

(22) Anmeldetag: **08.12.87**

(51) Int. Cl.4: **G06F 11/16**

(30) Priorität: **16.12.86 DE 3642851**

(43) Veröffentlichungstag der Anmeldung:
**22.06.88 Patentblatt 88/25**

(84) Benannte Vertragsstaaten:
**AT CH DE FR GB IT LI SE**

(71) Anmelder: **BBC Brown Boveri Aktiengesellschaft Kallstadter Strasse 1 D-6800 Mannheim 31(DE)**

(72) Erfinder: **Chmillon, Klaus, Dr. Heinrichstrasse 21 D-6100 Darmstadt(DE)**

(74) Vertreter: **Rupprecht, Klaus, Dipl.-Ing. et al c/o BROWN, BOVERI & CIE AG Postfach 10 03 51 Zentralbereich Patente D-6800 Mannheim 1(DE)**

(54) **Fehlertolerantes Rechensystem und Verfahren zum Erkennen, Lokalisieren und Eliminieren von fehlerhaften Einheiten in einem solchen System.**

(57)
1. Fehlertolerantes Rechensystem und Verfahren zum Erkennen, Lokalisieren und Eliminieren von fehlerhaften Einheiten in einem solchen System

2.1 Bei einem fehlertoleranten Rechensystem bzw. Verfahren besteht die Aufgabe mit möglichst geringem Aufwand Fehler zu erkennen, den Fehlerort festzustellen und als gestört erkannte Systemteile vom Gesamtsystem abzutrennen, so daß das Gesamtsystem mit voller Leistung, aber verminderter Redundanz weiter arbeiten kann. Bei bekannten fehlertoleranten Systemen wird eine 2aus3-oder 3aus4-Mehrheitsentscheidung getroffen, wozu mindestens drei parallel arbeitende Rechner erforderlich sind.

2.2 Mit der Erfindung wird vorgeschlagen, bei fehlender Übereinstimmung der Ergebnisse aus zwei parallel arbeitenden Prozessoren einen Selbsttest mit kombiniertem gegenseitigem Ergebnisaustausch und Ergebnisvergleich vorzusehen, wobei als Testalgorithmus ein Teil des Nutzalgorithmus benutzt wird, von dem das richtige Ergebnis bekannt ist, so daß durch Vergleich dieses richtigen Ergebnisses mit den beiden Ergebnissen aus dem Testlauf eine 2aus3-Auswahl getroffen und der fehlerhafte Prozessor ermittelt werden kann.

2.3 Fehlertolerante Rechensysteme werden zur Automatisierung technischer Prozesse angewendet.

Fig 1

**Fehlertolerantes Rechensystem und Verfahren zum Erkennen, Lokalisieren und Eliminieren von fehlerhaften Einheiten in einem solchen System**

Die Erfindung bezieht sich auf ein Verfahren zum Erkennen, Lokalisieren und Eliminieren von fehlerhaften Einheiten in einem Rechensystem nach dem Oberbegriff des Anspruchs 1 sowie auf ein fehlertolerantes Rechensystem zur Durchführung des Verfahrens.

Besonders bei Anwendungen von Rechensystemen zur Automatisierung technischer Prozesse wird in zunehmendem Maße verlangt, daß Störungen in einer derartigen Datenverarbeitungsanlage erkannt werden und daß die Sicherheit und/oder die Verfügbarkeit nicht durch solche Störungen beeinträchtigt werden. Bezüglich der Reaktion auf detektierte Fehler wird unterschieden nach fail-safe-Verhalten und fehlertolerantem Verhalten. Bei sogenannten non-stop-Systemen wird außer dem fehlerhaften Verhalten zusätzlich verlangt, daß defekte Baugruppen entfernt bzw. intakte Baugruppen hinzugefügt werden können, ohne den laufenden Betrieb zu stören oder zu unterbrechen. Auch die Resynchronisation und Aktualisierung hinzugefügter Baugruppen muß im laufenden Nutzbetrieb erfolgen.

Auf Gebieten der Sicherungstechnik, wie z.B. der Eisenbahnsignaltechnik wendet man das fail-safe-Prinzip an, wobei ohne Rücksicht auf die Verfügbarkeit der angeschlossene Prozeß in einen sicheren Zustand überführt wird. Solche Datenverarbeitungseinrichtungen mit reinem fail-safe-Verhalten sind z.B. aus den europäischen Anmeldung 01 56 388 und 01 48 995 bekannt.

Fehlertolerierente Systeme führen die Steuerung und Regelung eines technischen Prozesses auch dann fort, wenn ein Teil des Automatisierungssystems defekt wird. Dazu muß ein auftretender Fehler detektiert, lokalisiert und schließlich eliminiert werden, indem der fehlerhafte Anlagenteil abgetrennt wird. Allgemein bekannt sind Systeme, bei denen über eine 2aus3-oder 3aus4-Mehrheitsentscheidung eine Entscheidung über die Richtigkeit der Ergebnisse aus drei bzw. vier parallel arbeitenden Prozessoren gefällt wird. Aus der europäischen Anmeldung 01 43 125 ist beispielsweise ein fehlertolerantes Parallelrechnersystem mit drei bzw. vier parallel arbeitenden Prozessoren bekannt. Nachteilig ist bei solchen Systemen der erforderliche hohe Aufwand.

Es sind auch solche Systeme bekannt, bei denen zwei Rechner parallel arbeiten. Das dabei auftretende Problem, bei unterschiedlichen Ergebnissen aus den beiden Rechnern zu entscheiden, welches Ergebnis richtig ist bzw. welcher Rechner defekt ist, ist z.B. angesprochen in NTG-Fachberichte 92, Seite 7 bis 29, insbesondere Seite 16, und es sind dort Möglichkeiten zur Erkennung von fehlerhaften Einheiten angegeben. Zu diesen Möglichkeiten zählt der Selbsttest mit Hilfe von Selbsttestprogrammen. Voraussetzung ist dabei, daß der Rechner noch so weit intakt ist, daß er einen solchen Selbsttest durchführen kann. Mit Hilfe solcher Testprogramme kann ein Rechner auch seinen Nachbarn überprüfen, wobei auch dies bei nur zwei Rechnern voraussetzt, daß eine Mindestfunktionsfähigkeit beider Rechner gegeben ist. Beim Selbsttest besteht auch das Problem, daß entweder eine lückenhafte Fehleraufdeckung gegeben ist, oder eine sehr lange Testzeit erforderlich ist. Ähnliche Probleme sind aus der Fertigungskontrolle bekannt. Bei Duplex-Fehlertoleranz steht während des langwierigen Selbsttests keine Ein-Ausgabe-Funktion zur Verfügung.

Davon ausgehend liegt der vorliegenden Erfindung die Aufgabe zugrunde, ein schnell arbeitendes Verfahren zum Erkennen, Lokalisieren und Eliminieren von praktisch allen Einfach-Fehlern in einem Rechensystem mit zwei am Ausgang gekoppelten Rechnern anzugeben. Außerdem soll ein fehlertolerantes Rechensystem zur Durchführung des Verfahrens angegeben werden.

Diese Aufgabe wird durch ein Verfahren nach Anspruch 1 sowie ein Rechensystem nach dem Anspruch 4 gelöst. Vorteilhafte Ausgestaltungen sind in Unteransprüchen angegeben.

Vorteile des Verfahrens sind insbesondere darin zu sehen, daß eine Störung in einem Teilsystem ohne zu Hilfenahme eines dritten oder vierten Prozessors nicht nur erkannt, sondern auch lokalisiert und die Störungsquelle schnell durch Isolation des fehlerhaften Teils eliminiert wird. Während der kurzen Zeit zwischen der Fehlererkennung und Beseitigung (Stoßzeit) weist das System fail-safe-Verhalten auf. Der gegenseitige Test der parallel arbeitenden Prozessoren bzw. die Feststellung welcher der Prozessoren intakt ist, ist auch dann noch möglich, wenn einer der Prozessoren ganz ausgefallen ist, bzw. beliebig undefinierte Ergebnisse liefert. Die vorgesehene rückwirkungsfreie Kopplung der Systemkomponenten ermöglicht ein Hinzufügen oder den austausch von Komponenten während des Betriebs. Weitere Vorteile ergeben sich aus den Unteransprüchen und der nachstehenden Beschreibung eines Ausführungsbeispiels, das in der Zeichnung dargestellt ist.

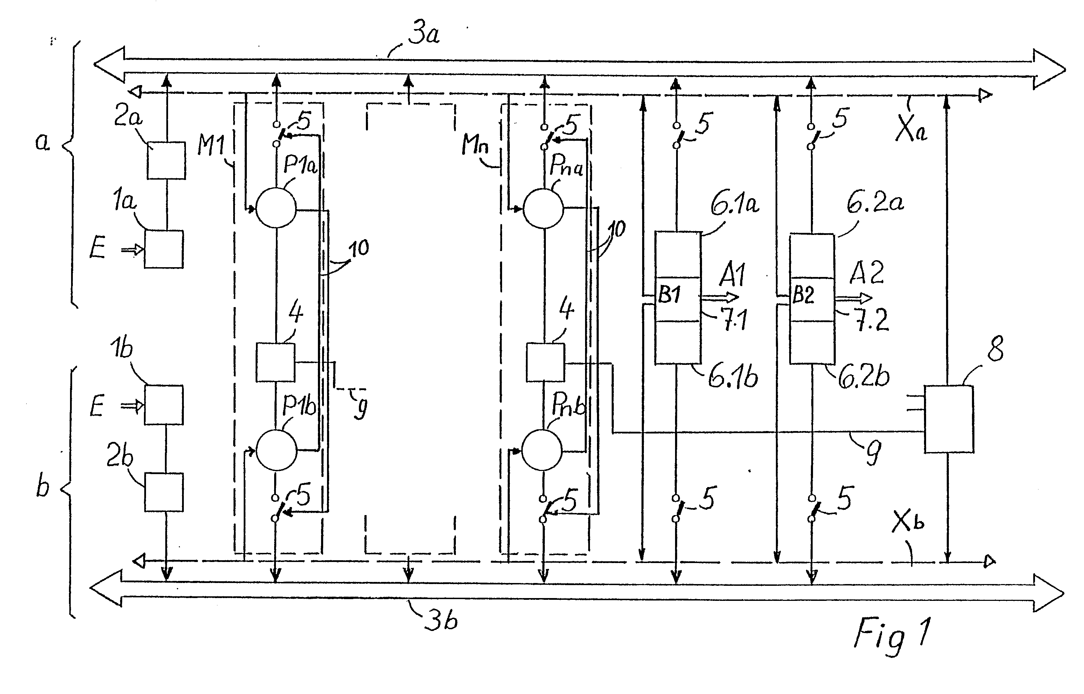

Fig. 1 zeigt die Architektur eines erfindungsgemäßen fehlertoleranten Rechensystems. Dabei sind zwei identische Teilsysteme a, b dargestellt, in einem rückwirkungsfreien, symmetrischen Systemaufbau. Das Gesamtsystem hat also einfache Redundanz. Das System enthält zwei voneinander unabhängig arbeitende Eingabebaugruppen 1a, 1b, denen identische Eingabedaten E zugeführt sind. Der Ausgang der Eingabebaugruppen 1a, 1b ist über erste Koppelglieder 2a, 2b rückwirkungsfrei mit je einem Bussystem 3a, 3b verbunden. An die Bussysteme 3a, 3b sind eine Anzahl 1 bis n von Mikroprozessorpaaren M1 bis Mn angeschlossen. Ein solches Mikroprozessorpaar M1 bis Mn enthält jeweils zwei Prozessoren P1a und P1b, bzw. P2a und P2b usw., zweite Koppelglieder 4, die jeweils die zwei Prozessoren, z.B. P1a und P1b miteinander rückwirkungsfrei verbinden, sowie zwei Trenneinrichtungen 5 über die jeweils einer der Prozessoren, z.B. P1a mit dem zugehörigen Bussystem, z.B. P3a des jeweiligen Teilsystems z.B. a verbunden ist. Weiterhin sind Ausgabebaugruppen 6.1a, 6.1b bzw. 6.2a, 6.2b vorgesehen, wobei jeder Ausgabebaustein z.B. 6.1a über eine auch als Isolationsschalter bezeichnete Trenneinrichtung 5 mit einem Bussystem z.B. 3a verbunden ist und jeweils zwei Ausgabebausteine z.B. 6.1a, 6.1b rückwirkungsfrei mit einem Comparator 7.1, 7.2, z.B. 7.1, zusammengeschaltet sind, der ein Ausgangssignal A1, A2, z.B. A1 abgibt. Die Comparatoren 7.1, 7.2 erzeugen zusätzlich ein Bewertungssignal B1 bzw. B2, das über zwei rückwirkungsfreie Hilfsbusse Xa, Xb den Prozessoren Pna (P1a, P2a usw.) bw. Pnb (P1b, P2b usw.) zugeführt wird. Die Hilfsbusse Xa, Xb sind vorzugsweise als serielle Busse ausgeführt.

Nachstehend wird die Funktionsweise des in Fig. 1 dargestellten Rechensystems beschrieben. Eingangsdaten E gelangen über die Eingabebaugruppen 1a, 2a und die Bussysteme 3a, 3b z.B. zum Mikroprozessorpaar M1. Die Prozessoren z.B. P1a, P1b des Mikroprozessorpaares M1 arbeiten algorithmensynchron mit den gleichen Eingabedaten E. Die Ergebnisse der Prozessoren P1a, P1b werden über die Bussysteme 3a, 3b zu den Ausgabebausteinen 6.1a, 6.2a bzw. 6.1b, 6.2b gegeben. Der Comparator, z.B. 7.1 vergleicht die in den Ausgabebausteinen 6.1a, 6.1b anstehenden Ergebnisse aus den beiden Teilsystemen a, b. Im störungsfreien Betrieb sind die Ergebnisse identisch und es erfolgt eine Durchschaltung als Ausgangssignal A1. Zusätzlich erzeugt der Comparator, z.B. 7.1 ein Bewertungssignal B1, welches den Prozessoren Pna und Pnb das Comparatorergebnis über die Hilfsbusse Xa und Xb mitteilt. In gleicher Weise führt der zweite Comparator 7.2 einen Vergleich der Ergebnisse aus den beiden Teilsystemen a, b durch, die in den Ausgabebausteinen 6.2a, 6.2b anstehen und gibt ein Ausgangssignal A2 und das Hilfssignal B2 ab. Die Ausgangssignale A1, A2 und die Ausgangssignale eventuell weiterer Ausgabebausteine können durch zusätzliche, nicht dargestellte Überwachungseinrichtungen überprüft werden.

Zum fehlertoleranten System wird das Rechensystem durch seine Einrichtungen zur Fehlerdetektion, Fehlerlokalisation, Fehlerreaktion, Fehlermeldung mit Fehlerortsmeldung und zur Fehlerbeseitigung. Außerdem ist eine Systemzustandsüberwachung vorgesehen.

Zur Fehlerdetektion ist eine Summenfehlerdetektion vorgesehen. Bei Systemfehlern, gleichgültig welcher Art, sprechen die Comparatoren 7.1, 7.2 an und verhindern eine fehlerhafte Ausgabe.

Die Fehlerlokalisation erfolgt durch Eingrenzung nach einem Ausschlußverfahren mit autonomen Einzeltests. In einer Teststufe werden Grundsystemtests durchgeführt. Dazu gehören zyklische Hardware-Tests im Hintergrund, die sich auf die Comparator-Hardware und die Bussysteme 3a, 3b einschließlich der Schnittstelleneinrichtungen und aller Trenneinrichtungen 5 beziehen.

In einer zweiten Teststufe werden die Prozessorpaare, z.B. P1a, P1b getestet, falls Bewertungssignale B1 oder B2 negativ sind, d.h. wenn die Ergebnisse der Teilsysteme a, b voneinander abweichen. Dazu ist in jedem Prozessor P ein Software-Comparator vorgesehen, der Zwischenergebnisse der Algorithmenschritte zweier zu einem Mikroprozessorpaar, z.B. M1 gehörenden Prozessoren, z.B. P1a, P1b vergleicht. Wie bereits zuvor erwähnt, arbeiten die Prozessoren P eines Mikroprozessorpaares M algorithmensynchron. Die Ergebnisse zweier aufeinanderfolgender Algorithmenschritte werden jeweils in beiden Prozessoren, z.B. P1a, P1b gespeichert. Wenn ein Verarbeitungsschritt N erreicht ist, in dem fehlende Übereinstimmung der Ausgangssignale A1, A2 der Teilsysteme a, b erreicht ist, erfolgt als nächster Schritt N + 1 ein Testschritt zur Feststellung welcher der beiden Prozessoren z.B. P1a, P1b fehlerhaft gearbeitet hat. Dabei ist als Test-Algorithmus der Nutz-Algorithmus des Verarbeitungsschritts N-1 verwendet, der noch bei beiden Prozessoren zum gleichen Zwischenergebnis geführt hat, und das gespeichert ist. Im Testschritt N + 1 wird der inzwischen defekte Prozessor nicht mehr in der Lage sein, das richtige Ergebnis zu liefern. Durch Vergleich der Ergebnisse der Prozessoren z.B. P1a, P2a im Schritt N + 1 mit dem Ergebnis aus dem Schritt N-1 kann somit vom Software-Comparator zumindest in demjenigen Prozessor, der noch vollständig in Ordnung ist, festgestellt werden, welcher Prozessor ein falsches Ergebnis liefert. Derjenige der beiden Prozessoren eines Paares Pna,b, dessen Selbsttest durch Vergleich des N-1 Nutzalgorithmusschrittes mit dem ersten Testschritt nach der Fehlermeldung (dies ist jetzt als Testalgorithmus wieder der N-1 Nutzalgorithmus) positiv gelingt und der eine falsche oder inkonsistente Meldung der Testergebnisse seines Partners über das Koppelglied 4 erhält, trennt diesen Partner aktiv über getrennte Steuerleitungen 10 und die Isolationsschalter 5 von einem der Systembusse 3a oder 3b ab. Der fehlerhafte Prozessor ist damit erkannt und als Störungsquelle aus dem System eliminiert worden. Das Ergebnis dieser zweiten Teststufe wird den Comparatoren 7.1 und 7.2 mitgeteilt, die dadurch erfahren, daß sie ihren fail-safe-Zustand verlassen können und bis zum erfolgten Wechsel des defekten Prozessormoduls nur noch von einem Teilsystem versorgt werden.

In einer dritten Teststufe erfolgt für den Fall, daß mit den Teststufen 1 und 2 kein fehlerhaftes Systemteil lokalisierbar war, und der Comparator 7.1, 7.2 trotzdem anspricht, ein Test des letzten noch nicht geprüften Hardware-Rests der Eingabebaugruppen 1a, 1b und Ausgabebausteine 6.1a, 6.1b, 6.2a, 6.2b durch versuchsweise Abtrennung jeweils einer dieser Baugruppen durch Abschalten der Sende-Empfangseinrichtung mit der Trenneinrichtung 5 in den Schnittstellen dieser Baugruppen zum Bussystem 3a, 3b.

Als Fehlerreaktion wird das in der Phase der Fehlerlokalisation ermittelte defekte Teilsystem bzw. die defekte Baugruppe mit Hilfe der Trennstellen 5 abgetrennt. Außerdem wurde bei Feststellung eines Fehlers im System vom Comparator 7.1, 7.2 die Ausgabe eines neuen Ergebnisses gesperrt. Das heißt, der letzte richtige Altwert bleibt am Ausgang als Ausgangssignal A1, A2 solange bestehen, bis die fehlerhafte Systemeinheit ermittelt und abgetrennt ist. Während dieser Zeit, die typisch einige Millisekunden dauert, weist das System also fail-safe-Verhalten auf. Danach arbeitet das System mit unverminderter Leistung, aber verminderter Redundanz weiter, solange das defekte Teil nicht ersetzt ist.

Nach einer vorteilhaften Ausgestaltung der Erfindung kann zusätzlich ein andauernder Selbsttest der Prozessoren P eines Mikroprozessorpaares M im Hintergrundbetrieb vorgesehen werden, wobei sich die Prozessoren P alternierend gegenseitig testen.

Im Gesamtsystem ist außerdem eine Fehlermeldeeinrichtung 8 vorgesehen. Diese Einrichtung erfaßt alle Fehlersituationen, die teils über die Hilfsbusse Xa, Xb und teils über direkte Meldeleitungen 9 aus nicht direkt am Bus 3a, 3b angeschlossenen Systemteilen, z.B. Koppelgliedern 4. Zu den fehlerhaften Zuständen gehört das Ansprechen der Comparatoren 7.1, 7.2, Ergebnisse der Tests von Sende-Empfangseinrichtungen in den Schnittstellen zu den Bussystemen 3a, 3b (Transceiver-Tests), Zustand der Trenneinrichtungen 5 und der ersten Koppelglieder 2, Ergebnisse der Tests von Prozessoren P1 bis Pn und der Synchronzustand der Prozessoren P in einem Mikroprozessorpaar M.

## Ansprüche

1. Verfahren zum Erkennen, Lokalisieren und Eliminieren von fehlerhaften Einheiten in einem Rechensystem mit wenigstens einem algorithmensynchron parallel arbeitenden Mikroprozessorpaar, dessen Ausgänge gekoppelt sind, und wobei die Ergebnisse der ein Paar bildenden Prozessoren jeweils nach definierten Programmschritten zwischen diesen Prozessoren ausgetauscht und in den Prozessoren verglichen werden, dadurch gekennzeichnet, daß
-die Zwischenergebnisse aus mindestens zwei aufeinanderfolgenden Programmschritten zwischengespeichert werden,
-sobald ein Programmschritt (N) erreicht ist, indem eine fehlende Übereinstimmung der Ergebnisse des gerade beendenden Programmschrittes festgestellt wird, als nächster Programmschritt (N + 1) ein Testschritt erfolgt, der darin besteht, daß beide Prozessoren (z.B. P1a, P1b) des Mikroprozessorpaares (z.B. M1) nochmals den Programmschritt (N-1) durchführen, der dem gestörten Programmschritt (N) vorausging, beide Prozessoren die beiden Ergebnisse des Testschrittes mit dem zuvor als richtig erkannten und zwischengespeicherten Ergebnis des Programmschrittes (N-1) vergleichen und dieses Ergebnis gegenseitig austauschen und
-der intakte Prozessor (P1a oder P1b), wenn er bei dem Vergleichsvorgang feststellt, daß nur sein Ergebnis mit dem gespeicherten Zwischenergebnis übereinstimmt, den so als gestört erkannten anderen Prozessor (P1b oder P1a) vom übrigen Rechensystem abtrennt.

2. Verfahren nach Anspruch 1, dadurch gekennzeichnet, daß die Ergebnisse aus den Prozessoren (z.B. P1a, P1b) über getrennte Bussysteme (3a, 3b, Xa, Xb) und Ausgabebausteine (6.1a, 6.1b bzw. 6.2a, 6.2b) einem Comparator (7.1 bzw. 7.2) zugeführt werden, der bei Auftreten unterschiedlicher Ergebnisse aus den beiden Teilsystemen (a,b) solange das zuletzt als richtig erkannte Ergebnis als Ausgangsignal (A1 bzw. A2) abgibt, bis die gestörte Systemeinheit ermittelt und vom Gesamtsystem abgetrennt ist.

3. Verfahren nach Anspruch 2, dadurch gekennzeichnet, daß die Comparatoren (7.1 bzw. 7.2) nach dem gleichen Verfahren wie die Mikroprozessorpaare (M1 bis Mn) als fehlertolerantes System arbeiten oder fehlerhafte Comparatoren (7.1 bzw. 7.2) nach einem Majoritätsprinzip, z.B. 2aus3 oder 3aus4 ermittelt werden.

4. Fehlertolerantes Rechensystem zur Durchführung des Verfahrens nach Anspruchs 1 bis 3, dadurch gekennzeichnet, daß das Gesamtsystem in zwei rückwirkungsfrei gekoppelte Teilsysteme (a,b) aufgeteilt ist, die jeweils ein Bussystem (3a, 3b, Xa, Xb) enthalten, an das Eingabebausteine (1a bzw. 1b) und Ausgabebausteine (6.1a, 6.2a bzw. 6.1b, 6.2b) angeschlossen sind, sowie Prozessoren (P1a bis Pna bzw. P1b bzw. Pnb) über Trenneinrichtungen (5) angeschlossen sind, von denen jeweils zwei Prozessoren (z.B. P1a und P1b) zu einem Mikroprozessorpaar (z.B. M1) rückwirkungsfrei gekoppelt sind und daß die Ausgabebausteine (6.1a und 6.1b bzw. 6.2a und 6.2b) der zwei Teilsysteme (a,b) jeweils über einen Comparator (7.1 bzw. 7.2) jeweils ein Ausgangssignal (A1 bzw. A2) und ein Bewertungssignal (B1, B2) abgeben.

Fig 1

0 271 807